# EUROPÄISCHE PATENTSCHRIFT

(11) **EP 0 312 978 B1**
(45) Veröffentlichungstag und Bekanntmachung des Hinweises auf die Patenterteilung: **29.12.1993**
(21) Anmeldenummer: 88117319.9
(22) Anmeldetag: 18.10.1988
(51) Int. Cl.: A21C 15/04, B26D 1/00

(54) **Vorrichtung zum Schneiden von Broten**
Apparatus for cutting loaves of bread
Dispositif pour couper des pains

(30) Priorität: 22.10.1987 DE 3735725
(43) Veröffentlichungstag der Anmeldung: 26.04.1989
(73) Patentinhaber: GEBRÜDER HERLITZIUS GMBH & CO KG, D-59494 Soest (DE)
(72) Erfinder: Herlitzius, Hans-Otto, D-4772 Bad Sassendorf-Weslarn (DE); Kagelmann, Karl-Wilhelm, D-4777 Welver-Einecke (DE)
(74) Vertreter: Spalthoff, Adolf, Dipl.-Ing.

(56) Entgegenhaltungen:
- EP-A- 0 056 346
- DE-A- 2 611 296
- DE-A- 2 733 097
- DE-A- 3 509 117
- DE-C- 693 263
- FR-A- 2 210 094
- GB-A- 2 139 080
- US-A- 3 256 838

## Beschreibung

Die Erfindung betrifft eine Vorrichtung zum Schneiden von Broten nach dem Oberbegriff des Patentanspruchs 1.

Aus der FR-A-2 210 094 ist eine Vorrichtung zum Schneiden von Broten bekannt, bei der die ungeschnittenen Brote von der Transportbahn einer Zufördereinrichtung einer mit Messern ausgerüsteten Schneidemaschine zugeführt und von der Schneidemaschine mittels einer Abfördereinrichtung abtransportiert werden.

Der Erfindung liegt die Aufgabe zugrunde, die gattungsgemäße Vorrichtung zum Schneiden von Broten derart weiterzubilden, daß Frischbrote, die ohne Verwendung von Konservierungsstoffen gebacken worden sind, steril geschnitten werden können, so daß das verpackte Schnittbrot die bisher bei Verwendung von Konservierungsstoffen übliche Haltbarkeit aufweist.

Diese Aufgabe wird erfindungsgemäß durch die Merkmale im kennzeichnenden Teil des Patentanspruchs 1 gelöst. Durch die Aufteilung der Transportbahn in zwei Teile wird sichergestellt, daß das ungeschnittene Brot im Tunnel allseitig von den Infrarot-Strahlungsröhren gleichmäßig bestrahlt werden kann, ohne daß das die Transportbahn ausbildende Fördermittel die Bestrahlung des ungeschnittenen Brots in irgendeiner Weise stören würde. Durch die allseitige Anordnung der Infrarot-Strahlungsröhren im Tunnel können die Brote allseitig von außen wirkungsvoll strahlungsbehandelt und damit entkeimt werden.

Damit die Brote die freie Strecke im Tunnel einfach überbrücken können, können vor und hinter dem Tunnel, vorzugsweise verstellbare, Niederhaltefedern vorgesehen sein, die ein Kippen der Brote auf die Infrarot-Strahlungsröhren verhindern.

Gemäß einem weiteren Merkmal der Erfindung sind die Infrarot-Strahlungsröhren in ihrer Leistung über einen Thyristor-Regler dem Brotdurchsatz anpaßbar. Es ist auch möglich, die Regelung der Leistung der Infrarot-Strahlungsröhren zusätzlich in Abhängigkeit von der Geschwindigkeit der Transportbahn od.dgl. durchzuführen. Die Ansteuerung des Reglers für die Infrarot-Strahlungsröhren ist mit der Schneidemaschine gekoppelt, und zwar deren Ein- und Ausschaltung.

Gemäß einem weiteren Merkmal der Erfindung wird bei einer gattungsgemäßen Vorrichtung mit einer Beölungseinrichtung für das rotierende Messer der Schneidemaschine vorgeschlagen, daß die dem Zerteilen des Öls in feinste Tröpfchen dienende Spritzluft eine Ultraviolett-Bestrahlung durchläuft. Durch die Ultraviolett-Bestrahlung, vorzugsweise im UV-C-Bereich, findet eine völlige Abtötung von Sporen, Keimen, Bakterien usw. statt. Die Spritzluft ist somit vorher sterilisiert, so daß auch im Bereich des Schneidemessers nur keimfreie Luft mit Überdruck zugeführt wird.

In weiterer Ausgestaltung dieses Vorschlages kann eine Ultraviolett-Bestrahlung auch im Einlaufbereich der Schneidemaschine und/oder der Abfördereinrichtung vorgesehen sein, so daß auch in diesen Bereichen eine Sterilisation mittels UV-C-Bestrahlung erfolgt.

Gemäß einem weiteren Merkmal der Erfindung kann eine Ultraviolett-Bestrahlung auch außerhalb der Maschine vorhanden sein, welche mit Luftzuführungen zu der Beölungseinrichtung und/oder zu dem Einlaufbereich der Schneidemaschine und/oder der Abfördereinrichtung ausgerüstet ist.

Ein Ausführungsbeispiel der Erfindung ist an Hand der Zeichnung näher erläutert, und zwar zeigt:

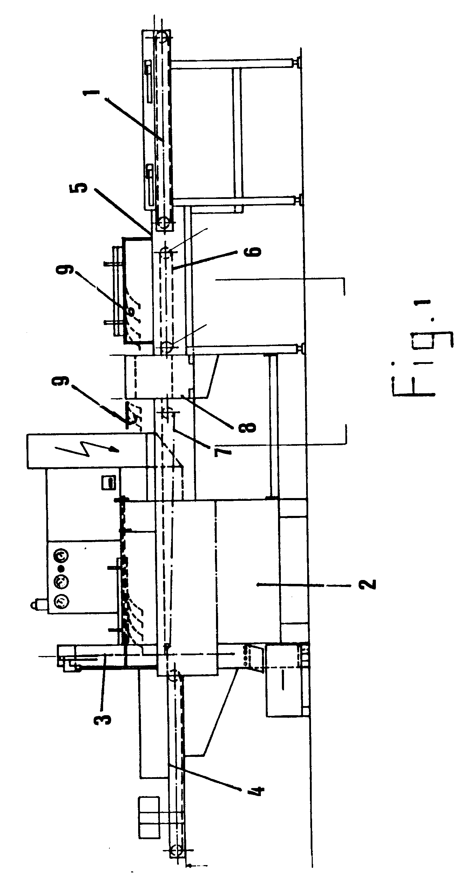

- Figur 1: eine Seitenansicht der erfindungsgemäßen Vorrichtung,

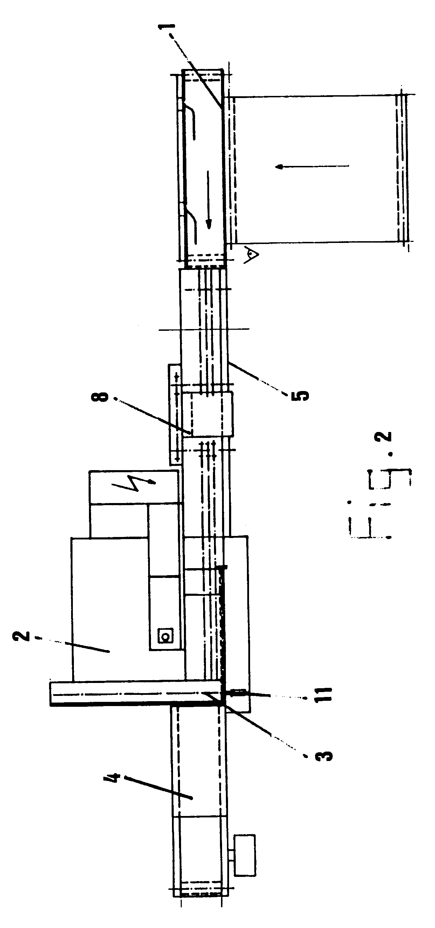

- Figur 2: eine Draufsicht der Figur 1,
- Figur 3: eine Ansicht eines Tunnels und
- Figur 4: eine Seitenansicht der Figur 3.

Die erfindungsgemäße Vorrichtung besteht in an sich bekannter Weise im wesentlichen aus einer Zufördereinrichtung 1 für die vorzugsweise frischgebackenen, ungeschnittenen Brote, einer Schneidemaschine 2 mit einem rotierenden Messer 3, beispielsweise einem Kreismesser, sowie einer Abfördereinrichtung 4 für die abgeschnittenen Einzelscheiben.

In dem Zulauf 5 für die ungeschnittenen Brote zum rotierenden Messer 3 ist die Transportbahn in zwei Teile 6, 7 unterteilt. Zwischen den Teilen 6, 7 der Transportbahn ist in dem Zulauf 5 ein Tunnel 8 angeordnet, derart, daß dessen Durchgang niveaugleich mit den Teilen 6, 7 der Transportbahn verläuft, so daß die Brote von dem Teil 6 der Transportbahn in den Tunnel 8 eingeschoben und auf der anderen Seite desselben von der Transportbahn 7 wieder übernommen werden.

Damit die zu schneidenden Brote die freie Tunnelstrecke überbrücken können, sind vor und hinter dem Tunnel 8 verstellbare Niederhaltefedern 9 angeordnet, die ein Kippen der zu schneidenden Brote verhindern.

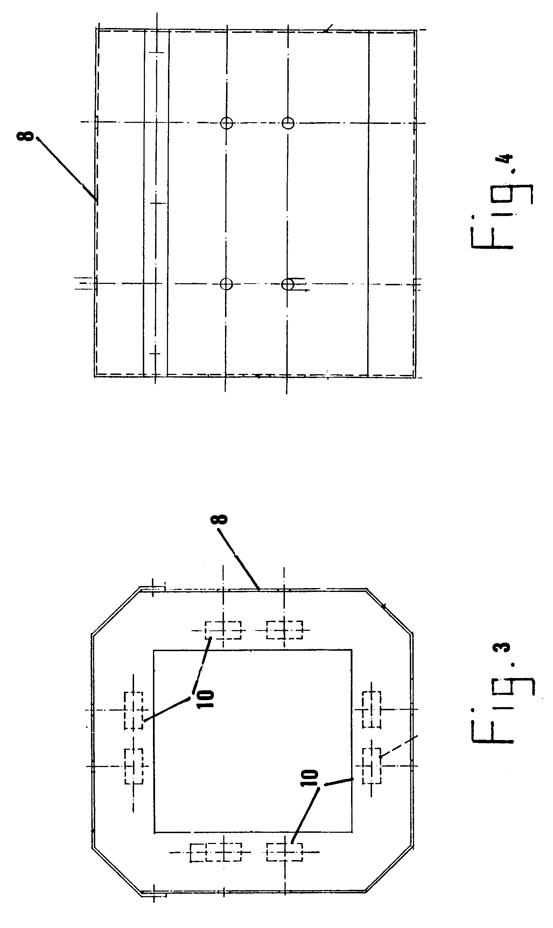

Wie insbesondere aus Figur 3 und 4 ersichtlich, sind die Infrarot-Strahlungsröhren 10 in dem Tunnel 8 allseitig, und zwar jeweils paarweise, angeordnet. Die den Tunnel 8 durchlaufenden Brote werden allseitig einer thermischen Bestrahlung unterzogen, so daß die an diesen etwa anhaftenden Sporen, Keime usw. abgetötet werden.

Die erfindungsgemäße Lösung ist auch bei vorhandenen Vorrichtungen nachrüstbar, wobei es jedoch einer Unterteilung der Transportbahn und der Zwischenordnung des mit den IR-Strahlungsröhren bestückten Tunnels bedarf.

Die in an sich bekannter Weise vorhandene Beölungseinrichtung 11 für die Säuberung des rotierenden Messers 3 kann mit einer Ultraviolett-Bestrahlung ausgerüstet sein, so daß die dem Zerteilen des Öls in feinste Tröpfchen dienende Spritzluft vor dem Auftreffen auf das Messer 3 steril gemacht wird und dem Messer 3 daher nur keimfreie Luft mit Überdruck zugeführt wird.

Vorteilhaft kann als Abfördereinrichtung ein selbsttätiger Portionierer Verwendung finden oder auch eine automatische Verpackungsmaschine, wobei letztere auch dem selbsttätigen Portionierer nachgeordnet sein kann. Auf diese Weise wird sichergestellt, daß die geschnittenen Scheiben nicht mehr von Hand erfaßt werden müssen und damit eine Gefahr ausgeschlossen wird, daß erneut Schimmelpilze, Bakterien usw. auf die geschnittenen Brotscheiben gelangen.

## Patentansprüche

1. Vorrichtung zum Schneiden von Broten mit einer Zufördereinrichtung (1), die eine Transportbahn (6, 7) für die ungeschnittenen Brote aufweist, einer Schneidemaschine (2), die ein rotierendes Messer (3) aufweist, zu dem die Transportbahn (6, 7) führt, und einer Abfördereinrichtung (4) für die abgeschnittenen Einzelscheiben, dadurch gekennzeichnet, daß die Transportbahn der Zufördereinrichtung (1) in zwei Teile (6, 7) unterteilt ist, zwischen denen ein Tunnel (8) angeordnet ist, der an allen Seiten mit Infrarot-Strahlungsröhren (10) ausgerüstet ist.

2. Vorrichtung nach Anspruch 1, bei der die Teile (6, 7) der Transportbahn Niederhaltefedern (9) aufweisen.

3. Vorrichtung nach Anspruch 2, bei der die Niederhaltefedern (9) einstellbar sind.

4. Vorrichtung nach einem der Ansprüche 1 bis 3, bei der die Infrarot-Strahlungsröhren (10) in ihrer Leistung über einen Thyristor-Regler dem Brotdurchsatz anpaßbar sind.

5. Vorrichtung nach Anspruch 4, bei der die Regelung der Leistung der Infrarot-Strahlungsröhren (10) in Abhängigkeit von der Geschwindigkeit der Transportbahn erfolgt.

6. Vorrichtung nach einem der Ansprüche 1 bis 5, mit einer Beölungseinrichtung (11) für das rotierende Messer (3) der Schneidemaschine (2), wobei die dem Zerteilen des Öls in feinste Tröpfchen dienende Spritzluft eine Ultraviolett-Bestrahlung durchläuft.

7. Vorrichtung nach einem der Ansprüche 1 bis 6, bei der eine Ultraviolett-Bestrahlung im Einlaufbereich der Schneidemaschine (2) und/oder der Abfördereinrichtung (4) vorgesehen ist.

8. Vorrichtung nach einem der Ansprüche 6 oder 7, bei der eine Ultraviolett-Bestrahlung vorhanden ist, welche mit Luftzuleitungen zu der Beölungseinrichtung (11) und/oder zu dem Einlaufbereich der Schneidemaschine (2) und/oder der Abfördereinrichtung (4) ausgerüstet ist.

9. Vorrichtung nach einem der Ansprüche 1 bis 8, dadurch gekennzeichnet, daß der Schneidemaschine (2) als Abfördereinrichtung (4) ein automatischer Portionierer und/oder eine Verpackungsmaschine nachgeordnet sind.

## Claims

1. Device for cutting loaves, comprising a supply device (1), which comprises a conveyor track (6, 7) for the uncut loaves, a cutting machine (2), comprising a rotating blade (3), to which the conveyor track (6, 7) leads, and a removing device (4) for the cut individual slices, characterised in that the conveyor track of the supply device (1) is subdivided into two parts (6, 7), between which there is disposed a tunnel (8), which is equipped on all sides with infra-red radiation tubes (10).

2. Device according to Claim 1, in the case of which the parts (6, 7) of the conveyor track comprise holding-down springs (9).

3. Device according to Claim 2, in the case of which the holding-down springs (9) are settable.

4. Device according to any one of Claims 1 to 3, in the case of which the output of the radiation tubes (10) can be adjusted to the loaf throughput by means of a Thyristor regulator.

5. Device according to Claim 4, in the case of which the control of the output of the infra-red radiation tubes (10) is performed in dependence on the speed of the conveyor track.

6. Device according to any one of Claims 1 to 5, comprising an oiling device (11) for the rotating blade (3) of the cutting machine (2), wherein in ultraviolet radiation passes through the sprayed air distributing the oil into very fine droplets.

7. Device according to any one of Claims 1 to 6, in the case of which ultraviolet radiation is provided in the inlet area of the cutting machine (2) and/or the removing device (4).

8. Device according to either one of Claims 6 or 7, in the case of which ultraviolet radiation is provided, which is equipped with air supplies to the oiling device (11) and/or to the inlet area of the cutting machine (2) and/or to the removing device (4).

9. Device according to any one of Claims 1 to 8, characterised in that an automatic portioning device and/or a packaging machine are located downstream of the cutting machine (2) as the removing device (4).

## Revendications

1. Dispositif pour couper des pains, comportant un dispositif de transport d'entrée (1) qui présente une bande transporteuse (6, 7) pour les pains non coupés, une machine à couper (2) qui présente un couteau (3) rotatif et auquel mène la bande transporteuse (6, 7) et un dispositif de transport de sortie (4) pour les tranches coupées, caractérisé par le fait que la bande transporteuse du dispositif de transport d'entrée (1) est divisée en deux parties (6, 7) entre lesquelles est disposé un tunnel (8) équipé sur tous ses côtés de tubes rayonnants infrarouges (10).

2. Dispositif selon la revendication 1, dans lequel les parties (6, 7) de la bande transporteuse présentent des ressorts presseurs (9).

3. Dispositif selon la revendication 2, dans lequel les ressorts presseurs (9)sont réglables.

4. Dispositif selon l'une des revendications 1 à 3, dans lequel la puissance des tubes rayonnants infrarouges (10) peut être adaptée au débit de pains par l'intermédiaire d'un dispositif de réglage à thyristors.

5. Dispositif selon la revendications 4, dans lequel la puissance des tubes rayonnants infrarouges (10) est réglée en fonction de la vitesse de la bande transporteuse.

6. Dispositif selon l'une des revendications 1 à 5 comportant un dispositif de huilage (11) du couteau (3) rotatif de la machine à couper (2), dans lequel l'air de pulvérisation pour la distribution de l'huile en gouttelettes très fines est soumis à un rayonnement ultraviolet.

7. Dispositif selon l'une des revendications 1 à 6, dans lequel un dispositif à rayonnement ultraviolet est disposé dans la zone d'entrée de la machine à couper (2) et/ou du dispositif de transport de sortie (4).

8. Dispositif selon l'une des revendications 6 ou 7, dans lequel il est prévu un dispositif à rayonnement ultraviolet qui est équipé de conduites d'amenée d'air au dispositif de huilage (11) et/ou à la zone d'entrée de la machine à couper (2) et/ou au dispositif de transport de sortie (4).

9. Dispositif selon l'une des revendications 1 à 8, caractérisé par le fait qu'il est monté à la suite de la machine à couper (2) comme dispositif de transport de sortie (4) un dispositif automatique de formation de portions et/ou une machine à emballer.
